# DEMANDE DE BREVET EUROPEEN

(11) **EP 2 837 750 A1**
(43) Date de publication de la demande: **18.02.2015**
(21) Numéro de dépôt: 14180681.0
(22) Date de dépôt: 12.08.2014
(51) Int. Cl.: E04B 9/22, E04B 9/18

(54) **Dispositif de fixation d'un panneau d'isolation**

(30) Priorité: 12.08.2013 FR 1357961
(71) Demandeur: RAM CHEVILLES ET FIXATIONS, 91320 Wissous (FR)
(72) Inventeur: Sergent, Gilbert, 13610 Le Puy-Sainte-Réparade (FR)
(74) Mandataire: Gendron, Vincent Christian

(57) **Abrégé**

L'invention concerne un dispositif de fixation (10) apte à relier un panneau isolant à une paroi de plancher, ladite paroi de plancher comprenant des éléments longitudinaux juxtaposés définissant une surface inférieure et des joints. Ledit dispositif présente une partie d'ancrage (12) opposée à une partie d'accrochage (14), ladite partie d'ancrage étant destinée à être engagée à force depuis ladite surface inférieure entre lesdits éléments longitudinaux juxtaposés, tandis que ledit panneau isolant est apte à être relié à ladite partie d'accrochage (14). Ladite partie d'accrochage (14) comporte une tige (16) présentant une extrémité libre en pointe (28) et au moins une ailette anti-retour (30, 32 ; 34, 36), de manière a pouvoir enfoncer ladite partie d'ancrage (14) dans ledit panneau isolant et à retenir ledit panneau isolant.

## Description

La présente invention se rapporte à un dispositif de fixation permettant de maintenir un panneau d'isolation sous une paroi de plancher faite d'éléments longitudinaux juxtaposés.

Un domaine d'application envisagé est notamment, mais non exclusivement, celui de l'isolation des planchers de rez-de-chaussée, dans les vides sanitaires.

Il est connu d'isoler par le dessous, les parois de plancher des habitations présentant un sous-sol par exemple, en appliquant des panneaux d'isolation contre la paroi de plancher, et en les maintenant en position fixe au moyen d'une ossature métallique suspendue.

On pourra se référer notamment au document FR 2 426 778, lequel divulgue un dispositif de fixation présentant une partie d'ancrage équipée de dents et une partie d'accrochage opposée faite d'un perçage ménagé à travers le dispositif. La paroi de plancher faite d'éléments longitudinaux juxtaposés définit des joints à travers lesquels sont engagées à force les parties d'ancrage des dispositifs de fixation. Ainsi, la partie d'accrochage des dispositifs de fixation s'étend en saillie de la surface inférieure définie par les éléments longitudinaux et une ossature métallique peut y être suspendue grâce aux perçages, afin de retenir un matériau isolant du type laine de roche ou bien des plaques de polystyrène.

Une telle isolation par le dessous d'une paroi de plancher est aisée à mettre en oeuvre depuis un sous-sol, où la hauteur de dégagement est importante. En revanche, elle est mal adaptée aux vides sanitaires où le dégagement est bien moindre. Et au surplus, elle peut s'avérer coûteuse.

Aussi, un problème qui se pose et que vise à résoudre la présente invention, est de fournir un dispositif de fixation permettant d'isoler aisément et à un coût avantageux les parois de plancher de rez-de-chaussée depuis les vides sanitaires.

Dans ce but, la présente invention propose un dispositif de fixation apte à relier un panneau isolant à une paroi de plancher, ladite paroi de plancher comprenant des éléments longitudinaux juxtaposés, lesdits éléments longitudinaux juxtaposés définissant une surface inférieure opposée à une surface supérieure et des joints entre lesdits éléments longitudinaux, ledit dispositif présentant une partie d'ancrage opposée à une partie d'accrochage, ladite partie d'ancrage étant destinée à être engagée à force depuis ladite surface inférieure entre lesdits éléments longitudinaux juxtaposés, tandis que ledit panneau isolant est apte à être relié à ladite partie d'accrochage. Ladite partie d'accrochage comporte alors une tige présentant une extrémité libre en pointe et au moins une ailette anti-retour solidaire de ladite tige, de manière a pouvoir enfoncer librement ladite partie d'ancrage dans ledit panneau isolant lorsque ledit panneau isolant est appliqué à force contre ladite extrémité libre, et à retenir ledit panneau isolant lorsque ledit panneau isolant cesse d'être appliqué contre ladite extrémité libre.

Ainsi, une caractéristique de l'invention réside dans la mise en oeuvre d'une tige dans le prolongement de la partie d'ancrage, laquelle tige présente une extrémité libre en pointe et au moins une ailette anti-retour. De la sorte, on vient enfoncer une pluralité de dispositifs de fixation dans la surface inférieure de la paroi de plancher, les parties d'ancrage à l'intérieur des joints, et ensuite on vient appliquer ledit panneau isolant en regard de la surface inférieur de la paroi de plancher pour l'entraîner à force contre les extrémités libres en pointe des tiges. Ces dernières sont orientées sensiblement perpendiculairement au panneau isolant, lequel est maintenu sensiblement parallèlement à la surface inférieure. De la sorte, à mesure que le panneau isolant est entraîné vers la surface inférieure, les tiges puis les ailettes anti-retour s'enfoncent à travers le panneau isolant, par exemple jusqu'à ce que ledit panneau isolant vienne en contact avec la surface inférieure définie par les éléments longitudinaux juxtaposés. Lorsque le panneau isolant est relâché, les tiges demeurent en prise dans son épaisseur grâce aux ailettes anti-retour, et il est maintenu suspendu, contre la surface inférieure des éléments longitudinaux juxtaposés du plancher. Ainsi, l'isolation du plancher est relativement aisée et nécessite moins de manipulation par rapport à la mise en oeuvre d'une ossature métallique. Les panneaux isolants sont par exemple réalisés dans un matériau alvéolé, du type polyuréthane ou bien encore du type polystyrène.

Selon un mode de mise en oeuvre de l'invention particulièrement avantageux, ladite partie d'ancrage et ladite partie d'accrochage sont des parties démontables. De la sorte, il est aisé de venir enfoncer à force la seule partie d'ancrage à l'intérieur des joints des éléments longitudinaux juxtaposés, puis de venir y accrocher ensuite les parties d'accrochage. Cette dernière, peut alors présenter une résistance mécanique moindre que la partie d'ancrage qui est par exemple frappé pour pouvoir être enfoncée.

Préférentiellement, ladite tige présente une extrémité de liaison située à l'opposé de ladite extrémité libre en pointe, ladite extrémité de liaison présentant une fente axiale et un ergot d'arrêt s'étendant en saillie à l'intérieur de ladite fente axiale. Ainsi, la tige et adaptée à être relié à la partie d'ancrage en portant celle-ci à travers la fente axiale, l'ergot d'arrêt permettant de les maintenir en position fixe l'une par rapport à l'autre, ainsi qu'on l'expliquera ci-après.

Quant à ladite ailette anti-retour, elle s'étend, avantageusement, de manière inclinée par rapport à ladite tige, vers l'opposée de ladite pointe. De la sorte, lorsque la tige vient s'enfoncer à travers le panneau isolant, l'ailette anti-retour tend à se rapprocher du corps de la tige pour faciliter l'enfoncement, tandis qu'à l'inverse, lorsque le panneau isolant est relâché et est suspendu à la tige sous l'effet de son propre poids, il tend à provoquer l'écartement de l'ailette anti-retour du corps de la tige et ainsi, à augmenter la retenue.

De plus, ladite partie d'accrochage comporte, de préférence, deux ailettes anti-retour symétriques l'une de l'autre par rapport à ladite tige. Une telle configuration permet d'améliorer plus encore la retenue du panneau isolant. Avantageusement, la partie d'accrochage comprend deux paires d'ailettes anti-retour pour un meilleur accrochage. Au surplus, et selon un mode de réalisation de l'invention particulièrement avantageux, ladite partie d'accrochage est moulée d'une seule pièce dans un matériau polymère, par exemple en polyamide ou encore en polyéthylène. Aussi, les ailettes sont préférentiellement reliées à la tige par un lien flexible, de manière à pouvoir limiter leur écartement de la tige lorsque le panneau isolant est suspendu.

En outre, ladite partie d'ancrage comporte une platine métallique présentant des dents d'ancrage étendues en saillie de ladite platine. De la sorte, lorsque la platine métallique est frappée pour être enfoncée dans les joints, les dents d'ancrage se replient sensiblement, pour reprendre ensuite leur position initiale et venir ensuite en prise dans les parois des éléments longitudinaux. Ces éléments longitudinaux sont par exemple réalisés en béton.

On observera que la partie d'ancrage, selon une autre variante de réalisation, peut être réalisée, la platine et les dents d'ancrage, dans une seule pièce en matière plastique. On obtient ainsi une partie d'ancrage à un coût avantageux.

Aussi, ladite platine métallique présente, avantageusement, un évidement d'accrochage, dans lequel vient s'étendre l'ergot d'arrêt de l'extrémité de liaison de ladite tige de telle sorte que la tige est accrochée à la platine métallique. Ainsi qu'on l'expliquera ci-après, lorsque la partie d'accrochage est moulée d'une seule pièce en matière plastique, l'ergot d'arrêt est flexible à l'intérieur de l'évidement d'accrochage, et la partie d'accrochage est alors reliée à la partie métallique par encliquetage.

Préférentiellement, lesdites dents d'ancrage s'étendent vers ledit évidement d'accrochage. De la sorte, les dents d'ancrage sont sensiblement inclinées par rapport à la platine et lorsque celle-ci est enfoncée dans le joint entre les éléments longitudinaux, les dents d'ancrage tendent à se déformer élastiquement et à ce rabattre vers le plan de la platine. Les dents d'ancrage se relâchent ensuite et viennent alors en prise contre les parois des éléments longitudinaux.

Aussi, ladite platine métallique présente deux enfoncements longitudinaux ménagés de chaque côté dudit évidement d'accrochage. De tels enfoncements permettent un renforcement structurel de la platine métallique, et ce, notamment au niveau de l'évidement d'accrochage qui lui a l'inverse, affaiblit sa résistance mécanique. Il est alors possible de frapper la platine métallique pour l'enfoncer dans les joints sans risque de la déformer.

Au surplus, ainsi qu'on l'expliquera ci-après dans la suite de la description, les deux enfoncements longitudinaux forment des nervures de guidage pour guider en translation la partie d'accrochage lorsqu'elle est reliée à la partie d'ancrage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective de trois quarts avant gauche d'un dispositif de fixation conforme à l'invention à l'état de repos ;
- la Figure 2 est une vue schématique de trois quarts arrière d'un élément du dispositif de fixation représenté sur la Figure 1 ;
- la Figure 3 est une vue schématique de côté d'un autre élément du dispositif de fixation représenté sur la Figure 1 ; et,
- la Figure 4 est une vue schématique de côté du dispositif de fixation illustré sur la Figure 1 à l'état actif.

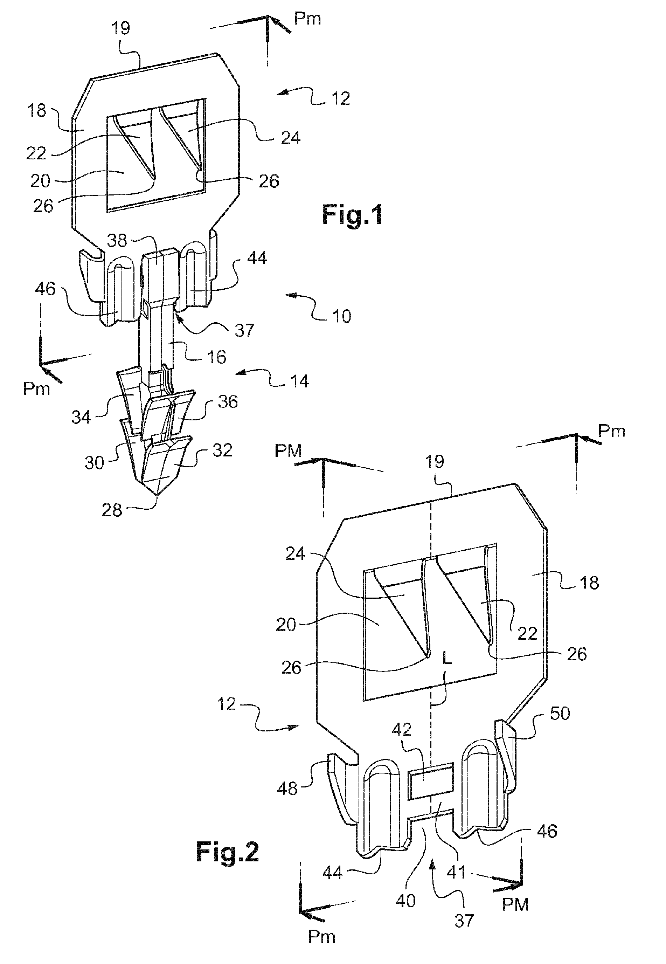

La Figure 1 illustre un dispositif de fixation 10 s'étendant longitudinalement et présentant une partie d'ancrage 12 opposée à une partie d'accrochage 14. La partie d'accrochage 14 comporte une tige 16 de section droite sensiblement rectangulaire, tandis que la partie d'ancrage 12 comporte une platine 18 définissant un plan moyen Pm. La platine 18 présente un bord libre supérieur 19 et un évidement central 20 sensiblement rectangulaire ainsi que deux dents 22, 24 parallèles entre elles s'étendant de manière inclinée par rapport au plan moyen Pm de la platine 18 et vers la tige 16. Ces deux dents 22, 24 sont de forme sensiblement triangulaire se terminant par une extrémité libre pointue 26. Elles sont par exemple inclinées d'un angle de 30° par rapport à la platine 18.

À l'opposé, la tige 16 que le plan moyen Pm vient couper sensiblement axialement, présente une extrémité libre en pointe 28 et deux paires d'ailettes superposées, une première paire 30, 32 s'étendant à partir de l'extrémité libre en pointe 28 ; et une seconde paire 34, 36 située au-dessus. Selon une variante de réalisation telle que représentée sur les Figures 1 à 4, la partie d'ancrage 12 et la partie d'accrochage 14 sont démontables. En outre, la partie d'ancrage 12 est réalisée d'une seule pièce dans un matériau métallique, tandis que la partie d'accrochage 14 est réalisée d'une seule pièce dans un matériau polymère, de préférence, moulée par injection. On observera que le dispositif de fixation 10 tel que représenté sur la Figure 1, peut également être, selon une autre variante, réalisé d'une seule pièce en matériau polymère, par exemple, par moulage.

Selon la variante de réalisation présentée sur la Figure 1, la platine 18 présente une extrémité de réception 37 opposée à l'évidement central 20, tandis que la tige 16 présente une extrémité de liaison 38. L'extrémité de réception 37 reçoit ainsi par encliquetage l'extrémité de liaison 38.

On décrira en détail, en référence à la Figure 2 la partie d'ancrage 12. Elle est présentée sur cette Figure en vue de trois quarts arrière droit. Elle est réalisée d'une seule pièce en métal, par découpage/emboutissage. On y retrouve son extrémité de réception 37 opposée au bord libre supérieur 19 par rapport à l'évidement central 20 pratiqué dans la platine 18. La partie d'ancrage 12 présente deux portions symétriques l'une de l'autre par rapport à un plan médian PM perpendiculaire au plan moyen Pm, et venant la couper axialement selon une ligne L. L'extrémité de réception 37 présente une encoche 40 et un évidement d'accrochage 42 rectangulaire, que le plan médian PM vient couper en deux parties respectivement symétriques l'une de l'autre. L'évidement d'accrochage 42 et l'encoche 40 sont ainsi séparés par un pont 41 coupé transversalement en son centre par le plan médian PM. En outre, l'extrémité de réception 37 présente deux enfoncements parallèles 44, 46 qui s'étendent de chaque côté de l'encoche 40 et de l'évidement d'accrochage 42 en formant des nervures. Ces deux enfoncements parallèles 44, 46 permettent de renforcer mécaniquement l'extrémité de réception 37, où précisément l'encoche 40 et l'évidement d'accrochage 42 viennent l'affaiblir. En outre, l'extrémité de réception 37 présente deux ailes d'arrêt 48, 50 qui viennent s'étendre perpendiculairement au plan moyen Pm défini par la platine 18. Les deux ailes d'arrêt 48, 50 sont formées de chaque côté des enfoncements 44, 46, et s'étendent en saillie de la platine 18 à l'opposé des dents 22, 24 par rapport au plan moyen Pm.

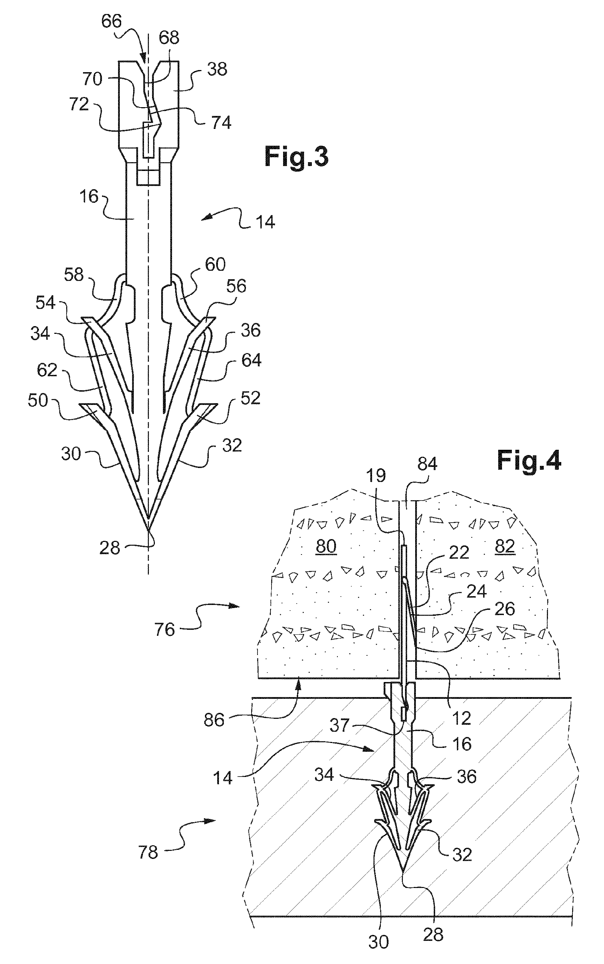

On se reportera maintenant sur la Figure 3 illustrant la partie d'accrochage 14. On y retrouve sa tige 16 et son extrémité de liaison 38 opposée à son extrémité libre en pointe 28. On y retrouve également la première paire d'ailettes 30, 32 s'étendant depuis l'extrémité libre en pointe 28 vers l'extrémité de liaison 38 et de manière inclinée par rapport à la tige 16. Les ailettes 30, 32 de la première paire sont symétriques l'une de l'autre par rapport à la tige 16. Les ailettes 34, 36 de la seconde paire sont reliées à la tige 16 au niveau des extrémités libres 50, 52 des ailettes 30, 32 de la première paire et elles s'étendent en V de manière inclinée par rapport à la tige 16 vers l'extrémité de liaison 38. Les ailettes 34, 36 sont sensiblement symétriques l'une de l'autre par rapport à la tige 16 et respectivement, sensiblement parallèles aux ailettes 30, 32 de la première paire.

Au surplus, les ailettes 34, 36 présentent des extrémités libres 54, 56 reliées à la tige 16 respectivement par des premiers liens flexibles 58, 60. En outre, les extrémités libres 50, 52 des ailettes 30, 32 de la première paire sont elles-mêmes respectivement reliées aux extrémités libres 54, 56 de la seconde paire au moyen de deux seconds liens flexibles 62, 64. Ainsi qu'on l'expliquera ci-après, les liens flexibles 58, 60 ; 62, 64 permettent d'autoriser le rapprochement des ailettes 34, 36 ; 30, 32 de la tige 16 par rapport à leur position d'équilibre représentée sur la Figure 3 et à l'inverse, d'interdire leur écartement par rapport à la tige 16.

À l'opposé, l'extrémité de liaison 38 présente une fente axiale 66 définissant deux parois internes opposées 68, 70. L'une des deux parois internes opposées 70 présente un retrait 72, tandis qu'à l'opposé, l'autre des deux parois internes opposées 68 présente un ergot d'arrêt 74 qui vient s'étendre dans le retrait 72.

De la sorte, la partie d'ancrage 12 et la partie d'accrochage 14 vont pouvoir être reliées ensemble comme on l'expliquera ci-après.

On se référera maintenant à la Figure 4 pour décrire le mode d'assemblage de la partie d'ancrage 12 et de la partie d'accrochage 14 pour pouvoir relier ensemble une paroi de plancher 76 et une plaque d'un matériau isolant 78. Le plancher 76 est représenté ici partiellement avec deux poutrelles longitudinales en béton 80, 82 juxtaposées. Les deux poutrelles 80, 82 représentées en section droite définissent alors un joint 84 débouchant dans une surface inférieure 86 de la paroi de plancher 76. Dans une première phase de montage, on vient engager le bord libre supérieur 19 dans le joint entre les poutrelles longitudinales en béton 80, 82, et on vient frapper axialement l'extrémité de réception 37 de la platine 18 de manière à venir l'engager à force dans le joint 84. Grâce aux enfoncements 44, 46, les impacts axiaux exercés sur l'extrémité de réception 37 ne provoquent aucune déformation de la partie d'ancrage 12 durant l'engagement dans le joint 84. Les dents 22, 24 se déforment alors élastiquement et se rabattent vers le plan de la platine 18. La partie d'ancrage 12 s'enfonce à l'intérieur du joint 84, au maximum, jusqu'à ce que les deux ailes d'arrêt 48, 50 viennent en butée contre la surface inférieure 86 sur les bords du joint 84. Dans cette position, les extrémités libres pointues 26 viennent s'ancrer dans l'une des parois internes du joint 84 formée par une face latérale de l'une des poutrelles longitudinales en béton 82. La partie d'ancrage 12 est ainsi coincée à l'intérieur du joint 84 et elle est maintenue en position fixe par rapport aux deux poutrelles longitudinales en béton 80, 82. L'extrémité de réception 37 s'étend alors en saillie de la surface inférieure 86 du plancher 76.

Ainsi, dans une deuxième phase, on vient rapporter ensuite l'extrémité libre de liaison 38 de la partie d'accrochage 14 sur l'extrémité de réception 37. Aussi, on engage axialement l'extrémité libre de liaison 38 entre les deux enfoncements 44, 46, et on entraîne en rotation la tige 16 de façon à orienter la fente axiale 66 pour que le pont 41 puisse venir lui-même s'y engager en travers. On entraîne alors axialement à force la partie d'accrochage 14 vers la partie d'ancrage, et le pont 41 s'appui contre la partie de l'ergot 74 formant rampe, tandis que les deux parties opposées de l'extrémité libre de liaison 38 séparées par la fente axiale 86 s'écartent l'une de l'autre. En poursuivant l'entraînement en translation de la partie d'accrochage 14, l'ergot 74 vient alors se relâcher à l'intérieur de l'évidement d'accrochage 42, et les deux parties opposées de l'extrémité libre de liaison 38 se rapprochent alors l'une de l'autre. L'extrémité libre de liaison 38 et l'extrémité de réception 37 de la partie d'ancrage sont alors verrouillées. Aussi, la partie d'accrochage 14, solidaire de la partie d'ancrage 12, s'étend librement, sensiblement perpendiculairement, en saillie de la surface inférieure 86.

Bien évidemment, une pluralité de dispositifs de fixation conforment à l'invention est fournie, et les dispositifs de fixation sont installés de proche en proche dans la surface inférieure 86 dans les joints entre les poutrelles en béton juxtaposées.

Partant, dans une troisième phase, on vient appliquer la plaque de matériau isolant 78 en regard de la surface inférieure 86 et en appui contre les extrémités libres en pointe 28 des tiges 16. On entraîne ensuite à force la plaque de matériau isolant 78 vers la surface inférieure 86 de manière à ce que les extrémités libres en pointe 28 s'enfoncent dans le matériau. À mesure de l'enfoncement, les ailettes 30, 32 ; 34, 36 tendent à se replier vers la tige 16, tandis que les liens flexibles 58, 60 ; 62, 64 fléchissent. Dès que la plaque de matériau isolant 78 vient en butée contre la surface inférieure 86, l'entraînement cesse et la plaque est relâchée. Sous l'effet de son propre poids la plaque tend à s'écarter sensiblement de la surface inférieure 86 tandis que les ailettes 30, 32 ; 34, 36 tendent à l'inverse, à se déployer et à s'écarter de la tige 16 alors que les liens flexibles 58, 60 ; 62, 64 s'étendent et les retiennent. À mesure qu'elles s'écartent elles offrent une plus grande résistance à la plaque de matériau isolant 78 qui demeurent alors suspendue à la partie d'accrochage 14. Grâce aux liens flexibles 58, 60 ; 62, 64, les ailettes 30, 32 ; 34, 36 ne risquent pas de se retourner et elles conservent leur faculté d'arrêt.

De la sorte, il est aisé et peu coûteux d'isoler les parois de plancher des rez-de-chaussée depuis leur vide sanitaire, au moyen de plaques de polystyrène ou de polyuréthane alvéolé.

## Revendications

1. Dispositif de fixation (10) apte à relier un panneau isolant (78) à une paroi de plancher (76), ladite paroi de plancher comprenant des éléments longitudinaux juxtaposés (80, 82), lesdits éléments longitudinaux juxtaposés définissant une surface inférieure (86) opposée à une surface supérieure et des joints (84) entre lesdits éléments longitudinaux (80, 82), ledit dispositif présentant une partie d'ancrage (12) opposée à une partie d'accrochage (14), ladite partie d'ancrage étant destinée à être engagée à force depuis ladite surface inférieure (86) entre lesdits éléments longitudinaux juxtaposés (80, 82), tandis que ledit panneau isolant (78) est apte à être relié à ladite partie d'accrochage (14) ;
**caractérisé en ce que** ladite partie d'accrochage (14) comporte une tige (16) présentant une extrémité libre en pointe (28) et au moins une ailette anti-retour (30, 32 ; 34, 36) solidaire de ladite tige (16), de manière a pouvoir enfoncer librement ladite partie d'ancrage (14) dans ledit panneau isolant (78) lorsque ledit panneau isolant est appliqué à force contre ladite extrémité libre (28), et à retenir ledit panneau isolant (78) lorsque ledit panneau isolant cesse d'être appliqué contre ladite extrémité libre (28).

2. Dispositif de fixation selon la revendication 1, **caractérisé en ce que** ladite partie d'ancrage (12) et ladite partie d'accrochage (14) sont des parties démontables.

3. Dispositif de fixation selon la revendication 2, **caractérisé en ce que** ladite tige (16) présente une extrémité de liaison (38) située à l'opposé de ladite extrémité libre en pointe (28), ladite extrémité de liaison (38) présentant une fente axiale (66) et un ergot d'arrêt (74) s'étendant en saillie à l'intérieur de ladite fente axiale (66).

4. Dispositif de fixation selon la revendication 2 ou 3, **caractérisé en ce que** ladite au moins une ailette anti-retour (30, 32 ; 34, 36) s'étend de manière inclinée par rapport à ladite tige (16), vers l'opposée de ladite pointe (28).

5. Dispositif de fixation selon l'une quelconque des revendications 2 à 4, **caractérisé en ce que** ladite partie d'accrochage (14) comporte deux ailettes anti-retour (30, 32) symétriques l'une de l'autre par rapport à ladite tige (16).

6. Dispositif de fixation selon l'une quelconque des revendications 2 à 5, **caractérisé en ce que** ladite partie d'accrochage (14) est moulée d'une seule pièce dans un matériau polymère.

7. Dispositif de fixation selon l'une quelconque des revendications 2 à 6, **caractérisé en ce que** ladite partie d'ancrage (12) comporte une platine métallique (18) présentant des dents d'ancrage (22, 24) étendues en saillie de ladite platine (18).

8. Dispositif de fixation selon la revendication 7, **caractérisé en ce que** ladite platine métallique (18) présente un évidement d'accrochage (42).

9. Dispositif de fixation selon la revendication 8, **caractérisé en ce que** lesdites dents d'ancrage (22, 24) s'étendent vers ledit évidement d'accrochage (42).

10. Dispositif de fixation selon la revendication 9, **caractérisé en ce que** ladite platine métallique (18) présente deux enfoncements longitudinaux (44, 46) ménagés de chaque côté dudit évidement d'accrochage (42).
